# EUROPEAN PATENT APPLICATION

(11) **EP 1 331 588 A1**
(43) Date of publication of application: **30.07.2003**
(21) Application number: 03290125.8
(22) Date of filing: 17.01.2003
(51) Int. Cl.: G06F 17/60

(54) **Device and method for managing production**

(30) Priority: 24.01.2002 JP 2002015075
(71) Applicant: Kabushiki Kaisha Toyota Jidoshokki, Kariya-shi, Aichi-ken 448-8671 (JP)
(72) Inventor: Takemoto, Kazuhiro, Kariya-shi, Aichi-ken 448-8671 (JP); Inagaki, Tetsuro, Kariya-shi, Aichi-ken 448-8671 (JP); Takami, Tsuyoshi, Kariya-shi, Aichi-ken 448-8671 (JP); Fukatsu, Satoshi, Kariya-shi, Aichi-ken 448-8671 (JP); Sawada, Shinya, Kariya-shi, Aichi-ken 448-8671 (JP)
(74) Representative: Derambure, Christian

(57) **Abstract**

A purchaser requests a supplier (2) to manufacture a component. A management form for managing a schedule ranging from the development to delivery of the component to be procured is jointly prepared by the procurement section (11), production management section (12) and inspection section (13) of the purchaser , and is stored in a publishing server. The publishing server publishes the management form for the supplier (2). The supplier (2) inputs information required by the purchaser to the published management form. The purchaser collectively manages the progress ranging from the development to the delivery of the component to be procured, using the information input by the supplier (2).

## Description

### Background of the Invention

### Field of the Invention

The present invention relates to a device and method for managing the production, particularly to a device and method for managing a schedule about development and delivery of components from suppliers.

### Description of the Related Art

Conventionally, when a product is manufactured, generally some components or all components composing the product are procured from suppliers (including affiliated companies). In particular, there are many suppliers in the industries of automobiles, electronics and the like where a great number of components are assembled.

The procurement of components is often conducted by network communication through the Internet or an extranet. For example, a system is known where electronic mail designating a component identifier, quantity of the component, a time limit of delivery and the like is sent to a supplier, and the supplier delivers the designated components . A system is also known where a request for a price quote of a component is sent to a plurality of suppliers over electronic mail, and the order is placed with a supplier that has presented the most favorable conditions.

However, when a new product is developed, usually, not only existing components but also new components to be developed must be procured. In this case, since a new component to be developed is usually manufactured based on a new design plan or new specification, it is difficult to procure the new components in the same sequence as that of the existing components. Therefore, new components to be developed have been rarely procured through the Internet or an extranet.

A company that wants to procure components (hereinafter called a "purchaser") must manage the quality, delivery, stable availability and the like of each component to be procured from a supplier. For this purpose, a purchaser has an inspection section and a production management section in addition to a procurement section. Each person in charge of these sections has, for example, a checklist prepared based on their experiences, and manages the progress of work done by a supplier and the quality of delivered components.

However, generally the checklists prepared for each section are independent from one another and work efficiency is often low. For example, if there is a common check item, a plurality of sections repeat the same inquiry to one supplier.

This problem is fatal in particular when a new product must be efficiently developed in a brief period of time in a "small amount with many variations" manufacturing system.

### Summary of the Invention

It is an object of the present invention to provide a method for efficiently managing the progress of a schedule ranging from the development to the delivery of a component to be procured from a supplier.

The production management device of the present invention uses a computer that can be accessed by a purchaser and a supplier, comprising: storage means for storing a management form for managing a component for which is the purchaser orders with the supplier; publishing means for publishing the management form stored in the storage means for the supplier through a network; update means for updating the management form stored in the storage means based on data input by the supplier; and output means for outputting the management form updated by the update means, wherein the management form is jointly prepared by a plurality of management sections of the purchaser.

According to the device, since the management form used to manage a component manufactured by the supplier is jointly prepared by a plurality of management sections of the purchaser, there are no overlapping management items and accordingly, the efficiency of management can be improved.

In the device of the present invention, the management form may include a management field for managing development of a component and progress of production, if the component for which the purchaser orders with the supplier must be newly developed by the supplier. According to this device, since the purchaser can check the development/production schedule of the component manufactured by the supplier in an earlier stage, the case where a problem surfaces in a later stage can be avoided.

Alternatively, the device of the present invention may further comprise result data storage means for storing result data indicating delivery observance or result data indicating the quality of each component delivered to the purchaser for each supplier or component, and the output means edits the management form in such a way that a particular part corresponding to the result data is distinguished and outputs the edited result to a terminal device of the purchaser to be displayed. According to this device, a supplier or component that has the possibility of causing a delivery or quality problem can be managed diligently without omission.

### Brief Description of the Drawings

Fig. 1 shows the entire configuration of a system in which the production management device of the embodiment is used;
Fig. 2A shows the configuration of a publishing server;
Fig. 2B shows the configuration of a terminal device installed in a purchaser or a supplier;
Fig. 3 shows an example of a parts list where components to be managed diligently are distinguished and displayed;
Figs. 4A and 4B show examples of the result data of a delivery observance ratio;
Fig. 5 shows an example of information for production displayed on a screen;
Fig. 6 shows an example of quality check information displayed on a screen;
Fig. 7 shows an example of a drawing issuance progress table displayed on a screen;
Fig. 8 shows an example of a reference lead-time table;
Fig. 9 shows an example a drawing issuance table displayed on a screen;
Fig. 10 shows an example of a delay table;
Fig. 11 shows a database for managing suppliers to be managed diligently; and
Fig. 12 shows a database for managing components to be managed diligently.

### Description of the Preferred Embodiments

The embodiments of the present invention are described below with reference to the drawings.

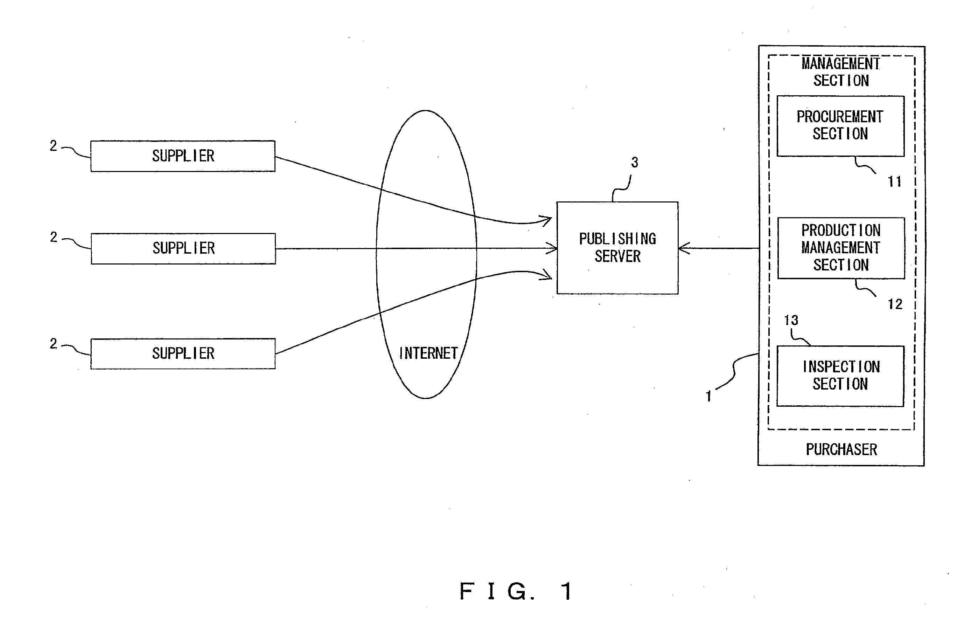

Fig. 1 shows an entire configuration of a system in which a production management device of the embodiment is used. In Fig. 1, a purchaser 1 is a manufacturing company and procures components composing a product from suppliers 2. The supplier 2 is, for example, a parts manufacturer and supplies components in response to a request from the purchaser 1. A publishing server 3 publishes a management form prepared by the purchaser 1 for the suppliers 2, using, for example, a Web page. In this case, the management form functions as a request slip for requesting the development/production of a new component and a check list for managing or confirming the progress of the development/production, which is described in detail later. The supplier 2 can access the publishing server 3 through a network (for example, the Internet) and can write corresponding information into the management form prepared by the purchaser 1.

The purchaser 1 includes a management section managing the delivery and quality of components to be procured from the supplier 2. This management section includes, for example, a procurement section 11 placing an order for components with the supplier 2 and managing the delivery, a production management section 12 managing the progress of the development/production of a new component in the supplier 2 and an inspection section 13 managing the quality of components manufactured by the supplier 2. The respective persons in charge of the procurement section 11, production management section 12 and inspection section 13 jointly prepare the management form.

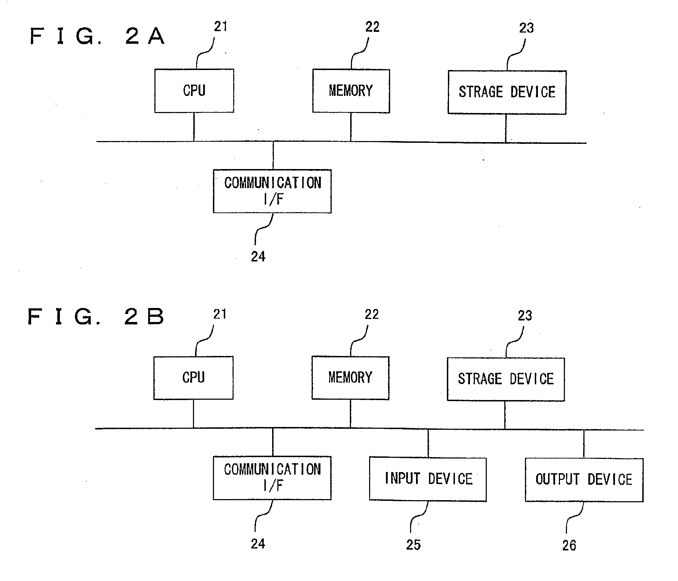

Fig. 2A shows a configuration of a publishing server 3. A CPU 21 executes a given program to provide corresponding functions. A memory 22 is a storage area used by the CPU 21. A storage device 23 stores programs to be executed by the CPU 21, a variety of data and so on. For the storage device 23, a hard disk and the like is used. A communication interface (I/F) 24 transmits/receives data to/from corresponding terminal device through a communication line, according to the instructions from the CPU 21. The management form prepared by the purchaser 1 is stored, for example, in a prescribed area of the storage device 23 in the publishing server 3.

Fig. 2B shows a configuration of a terminal device installed in the purchaser 1 or supplier 2. This terminal device is a client computer with a function to access the publishing server 3. Alternatively, this terminal device can be installed in each of the procurement section 11, production section 12 and inspection section 13.

In Fig. 2B, the CPU 21, the memory 22, the storage device 23 and the communication I/F 24 are basically the same as those described with reference to Fig. 2A. An input device 25 inputs user's instructions to the CPU 21. For the input device 25, a keyboard, a pointing device and the like are used. An output device 26 outputs data according to the instructions of the CPU 21. For the output device 26, a display device, a printer and the like are used.

Next, the management form prepared by the purchaser 1 is described. As described above, the management form functions as a checklist managing and confirming the progress of the development/production of a new component. The management form is prepared for each component and includes at least the following items.
(1) Name of a product for which the component is used.
(2) Name of the supplier
(3) Parts number
(4) Type of drawing
(5) Name of the component
(6) Desired lead time
(7) Agreed lead time
(8) Planned completion date of the drawing
(9) Actual completion date of the drawing
(10) Planned quantity per month
(11) Focused management (procurement)
(12) Focused management (design)
(13) Reason for design modification
(14) Delivery requirements
(15) Order of the initial lot using a production line
   (a) Time limit of delivery
   (b) Expected date of delivery
   (c) Actual date of delivery
   (d) Quantity
(16) Order of mass production using a production line
   (a) Time limit of delivery
   (b) Expected date of delivery
   (c) Actual date of delivery
   (d) Quantity
(17) Preparation of new facilities
   (a) Expected date
   (b) Actual date
(18) Preparation of mold tools etc
   (a) Expected date
   (b) Actual date
(19) Quality assurance method adopted when mold tools etc are not used
(20) Arrangement of a regular process
   (a) Plan
   (b) Result
(21) Order of materials
   (a) Plan
   (b) Result
(22) Order of articles supplied
   (a) Plan
   (b) Result
(23) Prototype production process
   (a) Plan
   (b) Result
(24) Mass production
   (a) Plan
   (b) Result
(25) Production capacity
   (a) Average man-hours (hours/unit)
   (b) Regular capacity (units/day)
   (c) Securement of inspectors
      (1) Plan
      (2) Result
(26) Quality check
   (a) Secondary outsourcing
      (1) Plan
      (2) Result

   (b) System of inspection with purchaser's attendance
      (1) Plan
      (2) Result
(27) Inspection method plan
   (a) Type
   (b) Deadline
   (c) Date of completion
(28) Process check
   (a) The first check
      (1) Planned date
      (2) Actual date (result)
      (3) Score

   (b) The second check
      (1) Planned date
      (2) Actual date (result)
      (3) Score
(29) Preparation plan of new references
   (a) QC progress chart
      (1) Existence/non-existence
      (2) Planned date of completion
      (3) Actual date of completion
   (b) Procedures
      (1) Existence/non-existence
      (2) Planned date of completion
      (3) Actual date of completion
   (c) Manual
      (1) Existence/non-existence
      (2) Planned date of completion
      (3) Actual date of completion
   (d) Training plan
      (1) Existence/non-existence
      (2) Planned date of completion
      (3) Actual date of completion
(30) Comments
(31) Evaluation

The management form is jointly prepared by the respective persons in charge of the procurement section 11, production management section 12 and inspection section 13, and is stored in the publishing server 3. The supplier 2 can browse the management form using a terminal device and write necessary data into related fields (for instance, items 7-10, 17-26 and 29 in the above example) . Each of the sections 11 through 13 of the purchaser 1 can refer to the management form, updated by the supplier 2, that is, the management form into which the supplier 2 has written necessary data. In this case, since there is no time lag in data transmission, the accuracy of data can be improved and information can be obtained in real time.

In addition, since the management form is provided with items for confirming the progress of the development/production of a new component, the purchaser 1 can manage not only the time limit of the delivery of a component to be procured from the supplier 2, but can also manage a more detailed schedule. Specifically, for example, by providing Item 17 "Preparation of new facilities", whether a new production facility is needed for the supplier 2 to produce a new component, when the new facility is expected to start and the like can be confirmed. By providing Item 21 "Order of materials" and Item 22 "Order of articles supplied", when the supplier 2 expects to secure necessary materials and articles supplied to produce the related component can be confirmed. Therefore, the purchaser 1 can check in an earlier stage whether there is no unreasonableness or redundancy in a schedule prepared by the supplier 2, and whether the preparation of the development/production is smoothly progressing. When a schedule input by the supplier 2 cannot satisfy the purchaser 1, the purchaser 1 can promptly request the supplier 2 to modify the schedule. As a result, the production efficiency of a product can be improved.

Furthermore, the management form is provided with Item 11 "Focused management (procurement)" and Item 12 "Focused management (design)". These items indicate priority information with respect to delivery and quality. For example, information indicating whether stricter delivery management than other components should be applied to the relevant component is set in Item 11 "Focused management (procurement)", based on the past delivery observance ratio of the relevant supplier or component. Information indicating whether stricter quality management than other components should be applied to the relevant component is set in Item 12 "Focused management (design)", based on the past defect ratio of the relevant supplier or component. Alternatively, link information for referring to a database in which worries about design and past failure cases are collected can be set in Item 11 "Focused management (design)".

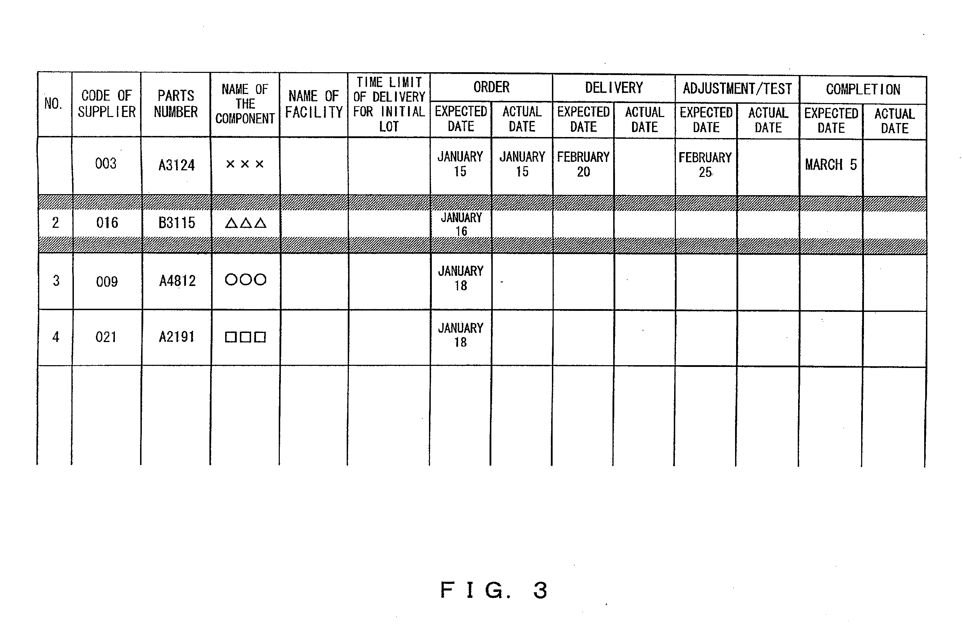

A component with "focused management" in the management form is, as shown in Fig. 3, distinguished from other components and displayed on the terminal device of the purchaser 1. Here, Fig. 3 shows a part of the management form displayed on a screen of the terminal device of the procurement section 11 or production management section 12. Specifically, when the procurement section 11 or production management section 12 wants to check the delivery progress of a component from the supplier 2, it transmits a browsing request to the publishing server 3. On receipt of this request, the publishing server 3 retrieves necessary information from all the stored management forms and extracts them and generates the table (or list) shown in Fig. 3. At this time, for example, whether "focused management (procurement)" is set for each component, and the record of a component with "focused management (procurement)" is displayed in a color different from other records. In this way, the procurement section 11 or production management section 12 can manage the development/production progress of a component whose delivery may be delayed without omission.

When a parts list is displayed on the terminal device of the inspection section 13, the record of a component with "focused management (design)" is distinguished from other records and displayed. In this way, the inspection section 13 can manage the inspection sequence for components with poor quality without omission.

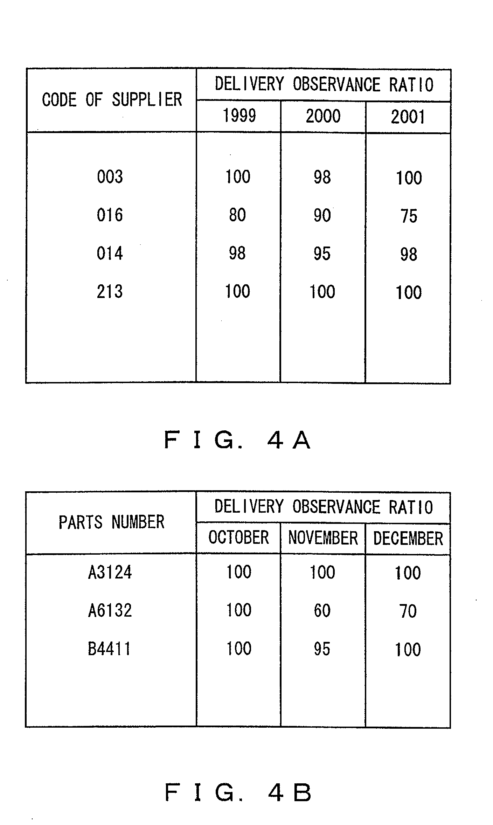

Fig. 4A shows a table storing the result data of delivery observance ratios for each supplier. The purchaser 1 collects a plurality of pieces of this result data and transfers the result data to the publishing server 3. Then, the publishing server 3 refers to the result data and judges whether "focused management" should be set for each component in the management form. For example, if the purchaser 1 requests a supplier with a delivery observance ratio lower than a prescribed value to manufacture a component, "focused management (procurement)" is set for the component to be procured from the supplier in the management form. In this way, when the purchaser 1 requests a supplier that may delay in delivering a component to manufacture a component, the record of the component is distinguished and displayed as shown in Fig. 3.

Fig. 4B shows a table storing the result data of delivery observance ratios for each component. A plurality of pieces of the result data are also collected by the purchaser 1 and are referenced by the publishing server 3. For example, when there is a component with a delivery observance ratio lower than a prescribed value, "focused management (procurement)" is set for the component in the management form.

The purchaser 1 also collects the defective ratios of delivered components for each component and for each supplier. The publishing server 3 also refers to this result data. In this case, "focused management (design)" is set in the management form for a component with a defective ratio higher than a prescribed value or a component manufactured by a supplier with a defective ratio higher than a prescribed value.

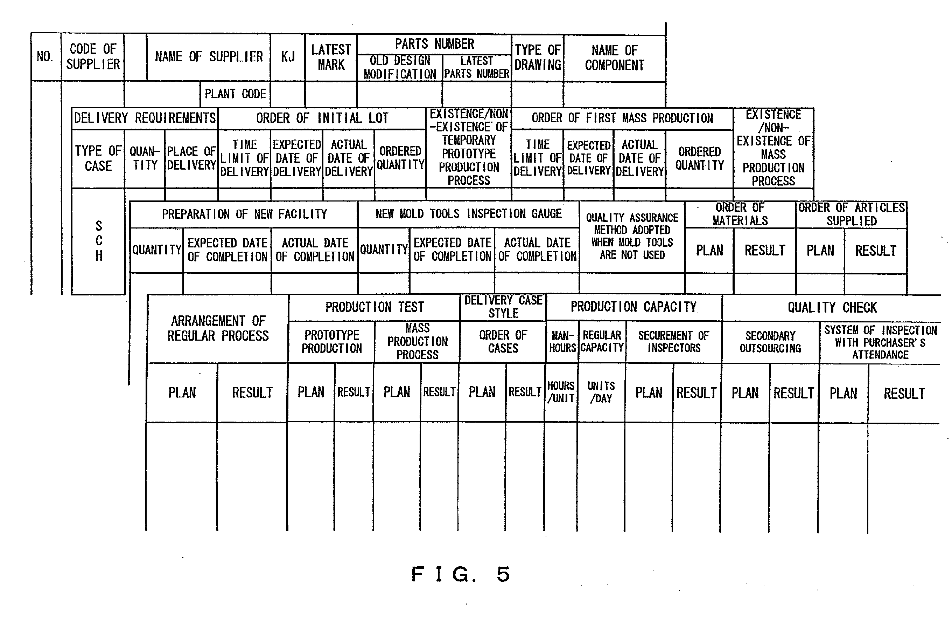

Fig. 5 shows examples of information for production preparation in the management form that is displayed on the terminal device of the purchaser 1 or supplier 2. In this case, information for production preparation is appropriately extracted from the management form according to instructions input through the terminal device of the purchaser 1 or supplier 2. However, on the terminal device of each supplier 2, only the records of components that are requested from the purchaser 1 to manufacture. Each of the persons in charge of the management sections (in particular, procurement section 11 and production management section 12) and person in charge of supplier 2 can input necessary information about related items. When such information is input, the contents of the corresponding management form stored in the publishing server 3 is updated.

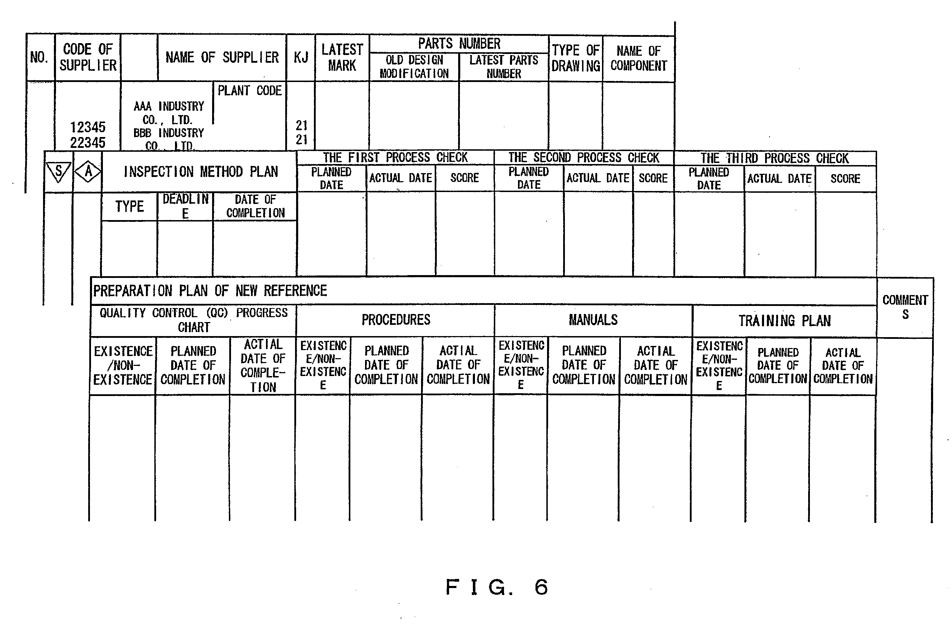

Fig. 6 shows information for quality inspection in the management form that is displayed on the terminal device of the purchaser 1 or supplier 2. As described above, the information for quality inspection is appropriately extracted from the management forms and the terminal device of the supplier 2 displays only part of the record. In addition, also as described above, each of the persons in charge of the purchaser 1 and supplier 2 can input necessary information about related items and accordingly, the contents of a corresponding management form stored in the publishing server 3 is updated. The display screen which displays information for quality inspection is provided with a comment field, and information, such as failure cases and the like can be written into the comment field.

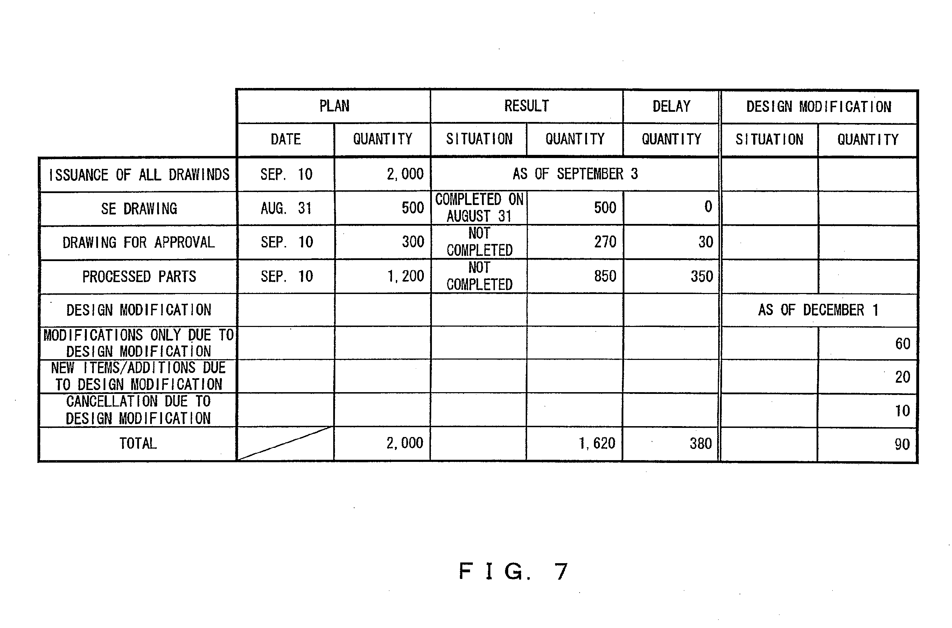

Fig. 7 shows an example display of a drawing issuance progress table. In this case, drawing issuance progress means how many of all necessary drawings are currently issued by the design section of the purchaser 1. In this case, although the production management section 12 prepares and manages this drawing issuance progress table, the table is also published for the procurement section 11, inspection section 13 and supplier 2 through the publishing server 3. In this way, all the persons in charge of the production can share the production progress.

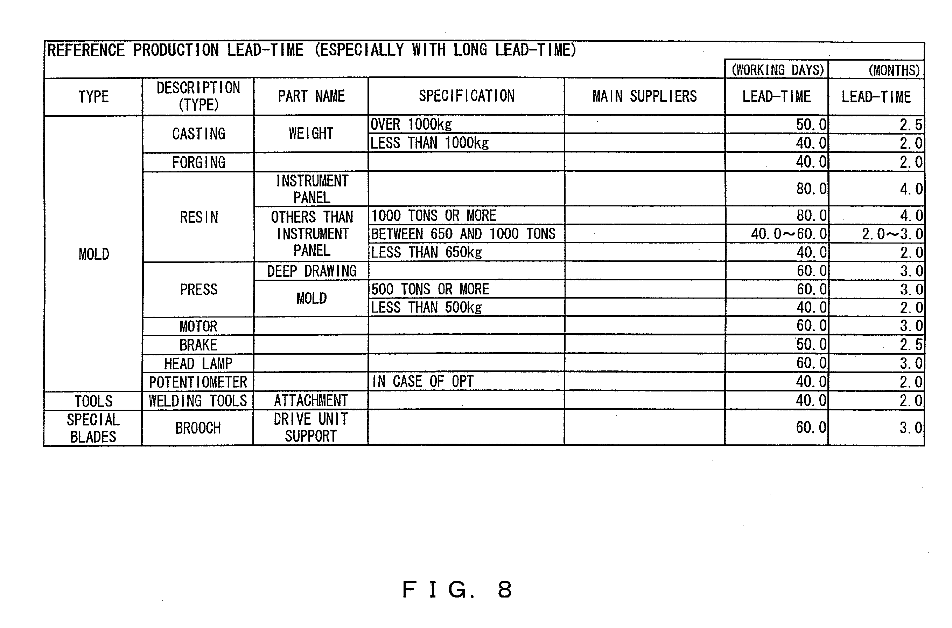

Fig. 8 shows an example of a reference lead-time table. In this lead-time table, the "lead-time" of each component that purchaser 1 requests a supplier 2 to manufacture is recorded. For the "lead-time" to be recorded, data obtained from past lead-time results is used. Therefore, if the purchaser 1 requests a supplier 2 to manufacture a new component similar to one previously manufactured, the accuracy of the estimated lead-time of the new component is high. This lead-time can be used for Item 6 "Desired lead-time" of the management form.

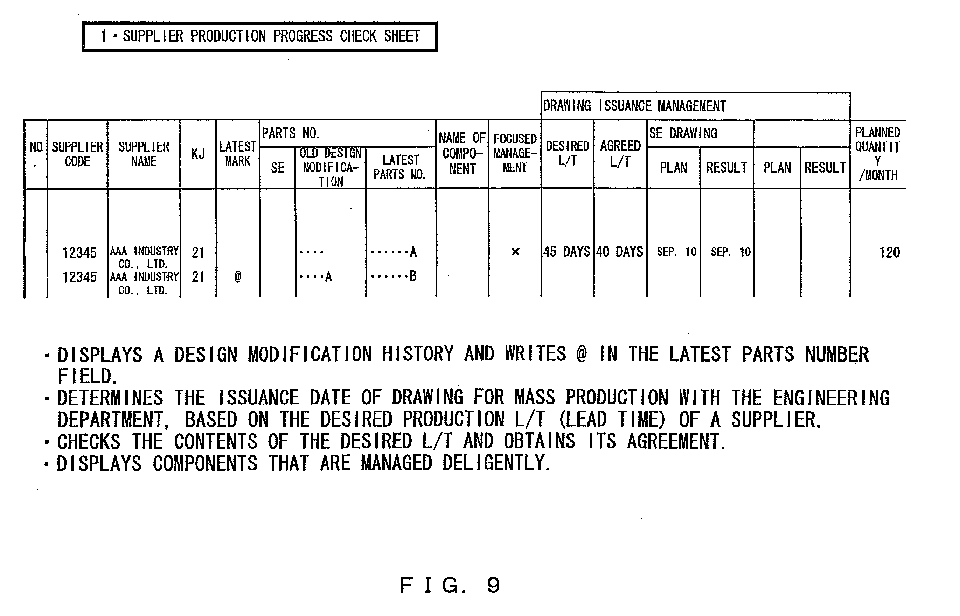

Fig. 9 shows an example of data for drawing issuance management. When the purchaser 1 or supplier 2 wants to browse data for drawing issuance management, the publishing server 3 edits a management form in such a way as to include Items 1 through 13, and displays the data on the corresponding terminal device. In the example display shown in Fig. 9, fields from "No." through "Focused management" are displayed, for example, in blue so that the production management section 12 of the purchaser 1 can easily input necessary information. Items from "Agreed L/T (lead-time)" through "Planned quantity/month" are displayed, for example, in green so that the supplier 2 can easily input necessary information.

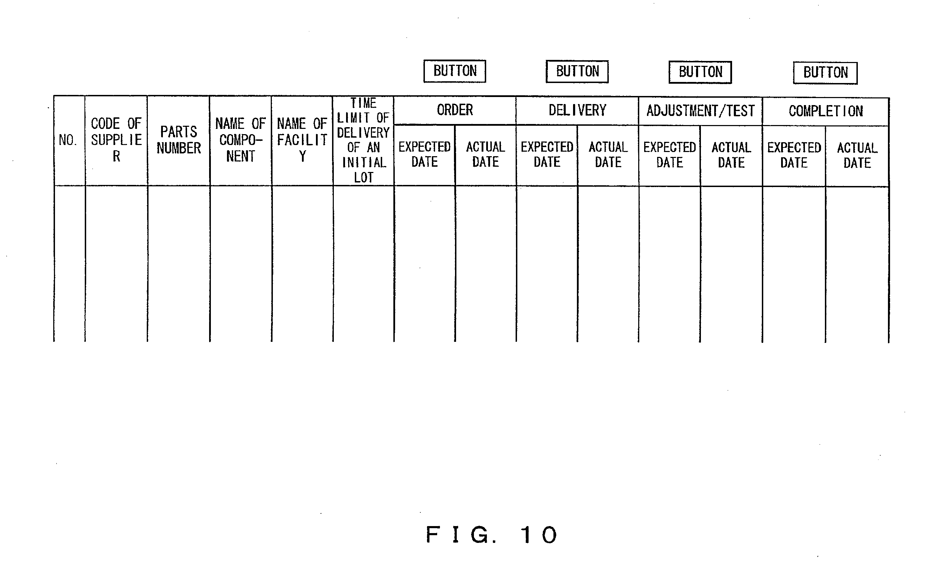

Fig. 10 shows an example of a delay table. The management sections 11 through 13 of the purchaser 1 can access this delay table. When the management sections 11 through 13 of the purchaser 1 want to list up components, whose delivery has been delayed, they click a button located above a corresponding item. For example, if a button located above field "Delivery" is pushed, components, whose delivery has been delayed, are listed. In this way, the purchaser 1 can recognize the occurrence of delay for each management item. Here, since the terminal device of any of the procurement section 11, production management section 12 and inspection section 13 can access this delay table, necessary information can be easily obtained with no time lag of information between the sections.

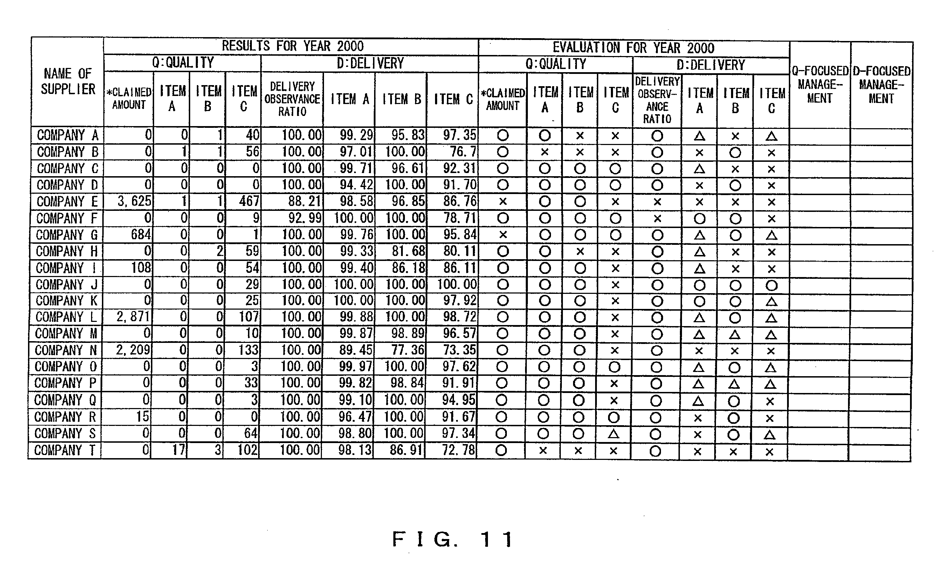

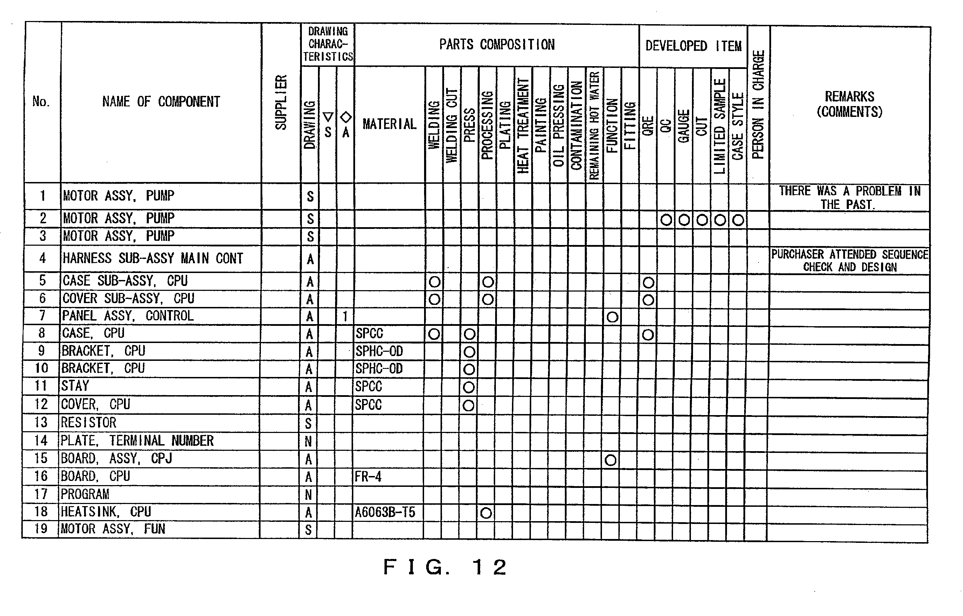

Fig. 11 shows an example of a database managing suppliers to be managed diligently. In this example, it is judged which supplier should be managed diligently, based on a delivery observance ratio in the past. Fig. 12 shows an example of a database managing components to be managed diligently. In this example, a remarks field is provided and remarkable information can be written into the field.

As described above, according to the management method of the embodiment, since the management information possessed by the management sections 11 through 13 of the purchaser 1 is unified, the repetition of the same inquiry to the supplier 2 can be avoided. Since management information is shared by the management sections 11 through 13 and items to be managed diligently are extracted, components that may cause a problem in the future can be managed without omission. Furthermore, since management information is unified or centralized, each process can be efficiently performed.

Although in the embodiment described above, the trade of components composing a product is described, the present invention is not limited to this, and is applicable to an arbitrary trade of goods other than components.

Although in the embodiment described above, only the procurement section 11, production management section 12 and inspection section 13 jointly prepare the management forms, other sections such as a section related to the design of components can also join the preparation.

According to the present invention, since information for managing production in a supplier is unified, the purchaser and supplier can share the same recognition about situation and the purchaser can track the progress of the development/production of a new component without delay. Furthermore, since the input/confirmation of the progress is conducted through the publishing server, time for inquiries/replies between the purchaser and supplier can be saved. In addition, when a problem occurs, adjustments can be made in an earlier stage. Accordingly, the development period of a product can be shortened as a whole.

## Claims

1. A device (3) for managing production using a computer that can be accessed by a purchaser (1) and a supplier (2), comprising:
storage means for storing a management form for managing a component for which is the purchaser (1) orders with the supplier (2);
publishing means for publishing the management form stored in said storage means for the supplier (2) through a network;
update means for updating the management form stored in said storage means based on data input by the supplier (2); and
output means for outputting the management form updated by said update means, wherein
the management form is jointly prepared by a plurality of management sections (11, 12, 13) of the purchaser (1).

2. The device according to claim 1, wherein
the management form includes a management field for managing development of a component and progress of production, if the component for which the purchaser orders with the supplier must be newly developed by the supplier.

3. The device according to claim 1, further comprising
result data storage means for storing result data indicating delivery observance for each supplier or component, wherein
said output means edits the management form in such a way that a particular part corresponding to the result data is distinguished and outputs the edited result to a terminal device of the purchaser to be displayed.

4. The device according to claim 1, further comprising
result data storage means for storing result data indicating the quality of each component delivered to the purchaser for each supplier or component, wherein
said output means edits the management form in such a way that a particular part corresponding to the result data is distinguished and outputs the edited result to a terminal device of the purchaser to be displayed.

5. A method for managing production using a computer that can be accessed by a purchaser (1) and a supplier (2), comprising:
storing a management form, which is jointly prepared by a plurality of management sections (11, 12, 13) of the purchaser (1), for managing a component for which the purchaser (1) orders with the supplier (2), in a prescribed memory area;
publishing the stored management form through a network for the supplier (2);
updating the stored management form based on data input by the supplier (2); and
outputting the updated management form to a terminal device of the purchaser (1) or the supplier (2) according to an access from the purchaser (1) or the supplier (2).
